# EUROPÄISCHE PATENTANMELDUNG

(11) **EP 2 363 849 A2**
(43) Veröffentlichungstag der Anmeldung: **07.09.2011**
(21) Anmeldenummer: 11450008.5
(22) Anmeldetag: 21.01.2011
(51) Int. Cl.: G09B 9/12, G09B 9/20

(54) **Trainingsanordnung zum Training von Flugzuständen**

(30) Priorität: 22.01.2010 AT 842010
(71) Anmelder: Wunderwerk Digitale Medien Produktion Gmbh, 1060 Wien (AT)
(72) Erfinder: Margreiter, Andreas, 1190 Wien (AT)
(74) Vertreter: Gibler & Poth Patentanwälte OG

(57) **Zusammenfassung**

Bei einer Trainingsanordnung (1) zum Training von Flugzuständen eines senkrechtstart- und/oder senkrechtlandefähigen Luftfahrzeuges, umfassend wenigstens eine erste Aufnahme (2) für wenigstens einen Probanden, eine Bodenkontakteinrichtung (3), etwa Kufen (4) und/oder ein Fahrwerk, eine Bewegungseinrichtung (5) und wenigstens ein Steuerorgan, wobei die erste Aufnahme (2) mit der Bewegungseinrichtung (5) im Wesentlichen starr verbunden ist, wobei die Bodenkontakteinrichtung (3) wenigstens mittelbar mit der ersten Aufnahme (2) verbunden ist, wobei die Bewegungseinrichtung (5) als Roboter (6), insbesondere als Industrieroboter (7), mit serieller Kinematik zur Bewegung der ersten Aufnahme (2) in wenigstens sechs räumlichen Freiheitsgraden ausgebildet ist, und wobei das Steuerorgan zur wenigstens mittelbaren Interaktion des Probanden mit der Bewegungseinrichtung (5) ausgebildet ist, wird vorgeschlagen, dass die Trainingsanordnung (1) eine Plattform (8) umfasst, zum Abheben und/oder Aufsetzen der Bodenkontakteinrichtung (3), und dass die Plattform (8) bewegbar, vorzugsweise vorgebbar maschinell verstellbar, ist.

## Beschreibung

Die Erfindung betrifft eine Trainingsanordnung zum Training von Flugzuständen eines senkrechtstart- und/oder senkrechtlandefähigen Luftfahrzeuges gemäß dem Oberbegriff des Patentanspruches 1.

Es sind Simulatoren zur Flugsimulation bekannt, welche eine Simulation der Bewegung eines zu simulierenden Objekts, etwa eines Flugzeugs oder Hubschraubers, in sechs räumlichen Freiheitsgraden ermöglichen. Derartige Simulatoren sind als Hexapoden bzw. als sog. Stewart-Plattform ausgebildet, welche ein Modell des Cockpits eines zu simulierenden Luftfahrzeuges trägt. Die Fenster sind von Bildschirmen oder Projektionsflächen umgeben, auf welchen an den jeweiligen Simulationsstand angepasste Umgebungsbilder angezeigt werden. Nachteilig an derartigen Flugsimulatoren ist, dass diese sehr groß, schwer, kostenintensiv und unflexibel sind. Mit einem bestimmten Typ eines Flugsimulators kann jeweils nur ein Typ eines Luftfahrzeuges simuliert werden, wobei in der Regel auch nicht die volle Funktionalität und vor allem nicht die volle Beweglichkeit des tatsächlichen Luftfahrzeuges simuliert werden kann, da derartige Flugsimulatoren nur eine geringe tatsächliche Beweglichkeit aufweisen. Derartige bekannte Flugsimulatoren sind bereits bei der maximal tatsächlich erreichbaren Schräglage sowie beim tatsächlich erreichbaren Steig- bzw. Anstellwinkeln sehr limitiert. Dem Benutzer werden über eine von der tatsächlichen Schräglage bzw. dem tatsächlichen Steig- bzw. Anstellwinkel abweichende bzw. diese überschreitende Darstellungen der Umgebung, wesentlich größere Werte der jeweiligen Winkel suggeriert. Weiters sind die mit derartigen bekannten Flugsimulatoren erzielbaren Beschleunigungen äußerst limitiert. Dies kann erfahrungsgemäß zum Auftreten von Übelkeit bei den ausführenden Probanden führen, da die durch die menschlichen Gleichgewichtsorgane detektierten bzw. gefühlten tatsächlichen Schräglagen und/oder Beschleunigungen nicht mit den visuell feststellbaren bzw. dargestellten Schräglagen und/oder Beschleunigungen übereinstimmen. Aufgrund der Komplexität und der hohen Kosten derartiger Flugsimulatoren sind diese im Allgemeinen nur einem sehr eingeschränkten Personenkreis zugänglich.

Bekannte Flugsimulatoren weisen weiters den Nachteil auf, dass insbesondere kritische Flugzustände von senkrechtstart- und/oder senkrechtlandefähigen Luftfahrzeugen, wie beispielsweise Starts und/oder Landungen nicht so wirklichkeitsgetreu simuliert werden können, dass dies ein tatsächliches Training der betreffenden Flugsituation ermöglichen würde. Insbesondere ist mit bekannten Flugsimulatoren kein wirklichkeitsnahes Training von Starts und/oder Landungen auf bewegtem Untergrund, wie etwa einer Landeplattform auf einem Schiff, möglich.

Aufgabe der Erfindung ist es daher eine Trainingsanordnung zum Training von Flugzuständen eines senkrechtstart- und/oder senkrechtlandefähigen Luftfahrzeuges der eingangs genannten Art anzugeben, mit welcher die genannten Nachteile vermieden werden können, und mit welcher kritische Flugzustände, insbesondere Starts und/oder Landungen von bzw. auf bewegtem Untergrund, wirklichkeitsnahe trainiert werden können.

Erfindungsgemäß wird dies durch die Merkmale des Patentanspruches 1 erreicht.

Dadurch können kritische Flugzustände, wie insbesondere das Starten bzw. Landen, eines senkrechtstart- und/oder senkrechtlandefähigen Luftfahrzeuges, wie etwa eines Hubschraubers, wirklichkeitsnahe simuliert werden. Beim Training mit einer erfindungsgemäßen Trainingsanordnung ist ein Proband gezwungen einen "Start" bzw. eine "Landung" real durchzuführen, daher die Kufen bzw. das Fahrwerk des Luftfahrzeuges tatsächlich vom Boden abzuheben bzw. wieder auf diesem aufzusetzen. Dabei entsprechen sämtliche Beschleunigungen und Stöße, aber auch die Sicht aus dem Luftfahrzeug den tatsächlichen Zuständen beim Start bzw. der Landung eines realen Luftfahrzeuges im realen Betrieb. Dadurch kann insbesondere das Starten und/oder Landen eines senkrechtstart- und/oder senkrechtlandefähigen Luftfahrzeuges von einem bewegten Untergrund, wie etwa einer Landplattform eines Schiffs, welches durch den Seegang bewegt wird, wirklichkeitsnahe simuliert werden, wobei die Handhabung des Luftfahrzeuges, sowie die Sicht aus dem Luftfahrzeug den tatsächlichen Bedingungen einer realen Situation entsprechen. Durch die realitätsnahe Simulation und die Möglichkeit diese zu geringen Kosten wesentlich intensiver zugestalten als bei realen Flugstunden steigt das Ausbildungsniveau der Piloten, wodurch die Unfallgefahr beim letztendlichen Umgang mit realen Luftfahrzeugen deutlich reduziert werden kann. Neben dem Starten und Landen des Luftfahrzeuges auf der bewegten Plattform kann mit einer erfindungsgemäßen Trainingsanordnung auch das Aufnehmen und Absetzen von Passagieren und/oder Fracht von der bzw. auf die bewegte Plattform trainiert werden. Dadurch kann etwa das Absetzen bzw. Aufnehmen eines Arztes, Bergretters und/oder Verletzten auf ein fahrendes Schiff oder einen Zug, etwa auch mittels Seilwinde, trainiert werden. Derartige Situationen, bei welchen neben der Steuerung des Luftfahrzeuges, weiters unter realen Sichtbedingungen eine Außenlast kontrolliert werden muss, sind derzeit bei bekannten Flugsimulatoren nicht möglich.

Dadurch kann weiters auch die Belastung der Umwelt durch Lärm und Schadstoffe reduziert werden. Erfindungsgemäße Trainingsanordnungen können auch in einer Flugverbotszone oder einem ruhigen Altstadtbereich angeordnet sein. Derartige Anlagen sind nicht an herkömmliche Flugplätze bzw. an eine Landplattform, welche sich etwa tatsächlich auf einem Schiff befindet, gebunden.

Die Erfindung betrifft weiters ein Verfahren zum Training von Flugzuständen eines senkrechtstart- und/oder senkrechtlandefähigen Luftfahrzeuges gemäß dem Oberbegriff des Patentanspruches 12.

Bekannte Verfahren zum Training von Flugzuständen eines senkrechtstart-und/oder senkrechtlandefähigen Luftfahrzeuges weisen die eingangs dargelegten Nachteile auf.

Aufgabe der Erfindung ist es daher ein Verfahren zum Training von Flugzuständen eines senkrechtstart- und/oder senkrechtlandefähigen Luftfahrzeuges der vorstehend genannten Art anzugeben, mit welchem die genannten Nachteile vermieden werden können, und mit welchem kritische Flugzustände, insbesondere Starts und/oder Landungen von bzw. auf bewegtem Untergrund, wirklichkeitsnahe trainiert werden können.

Erfindungsgemäß wird dies durch die Merkmale des Patentanspruches 12 erreicht. Dadurch können sämtliche bei einer erfindungsgemäßen Trainingsanordnung geltend gemachten, und vorstehend angeführten, Vorteile und Wirkungen entsprechend auch bei dem erfindungsgemäßen Verfahren erzielt werden.

Die Unteransprüche, welche ebenso wie die unabhängigen Patentansprüche 1 und 12 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform einer erfindungsgemäßen Trainingsanordnung, mit der Bewegungseinrichtung in einer ersten Stellung, in axonometrischer Darstellung;
Fig. 2 die Trainingsanordnung gemäß Fig. 1 im Seitenriss, mit der Bewegungseinrichtung in einer zweiten Stellung;
Fig. 3 die Trainingsanordnung gemäß Fig. 2 in einer axonometrischen Darstellung;
Fig. 4 die Trainingsanordnung gemäß Fig. 2 im Grundriss;
Fig. 5 eine zweite bevorzugte Ausführungsform einer erfindungsgemäßen Trainingsanordnung, mit der Bewegungseinrichtung in einer dritten Stellung, in axonometrischer Darstellung;
Fig. 6 eine dritte bevorzugte Ausführungsform einer erfindungsgemäßen Trainingsanordnung, mit der Bewegungseinrichtung in einer vierten Stellung, in axonometrischer Darstellung;
Fig. 7 die Trainingsanordnung gemäß Fig. 6 im Grundriss;
Fig. 8 eine Detailansicht der Trainingsanordnung gemäß Fig. 6 im Seitenriss;
Fig. 9 eine Detailansicht der Trainingsanordnung gemäß Fig. 5 im Seitenriss, mit der Bewegungseinrichtung in einer fünften Stellung;
Fig. 10 die Trainingsanordnung gemäß Fig. 9 in axonometrischer Darstellung;
Fig. 11 bis 14 eine Ausführungsform der Trainingsanordnung mit einer Grube; und
Fig. 15 bis 18 eine Ausführungsform der Trainingsanordnung mit einer in allen Richtungen des Raumes frei beweglichen Plattform.

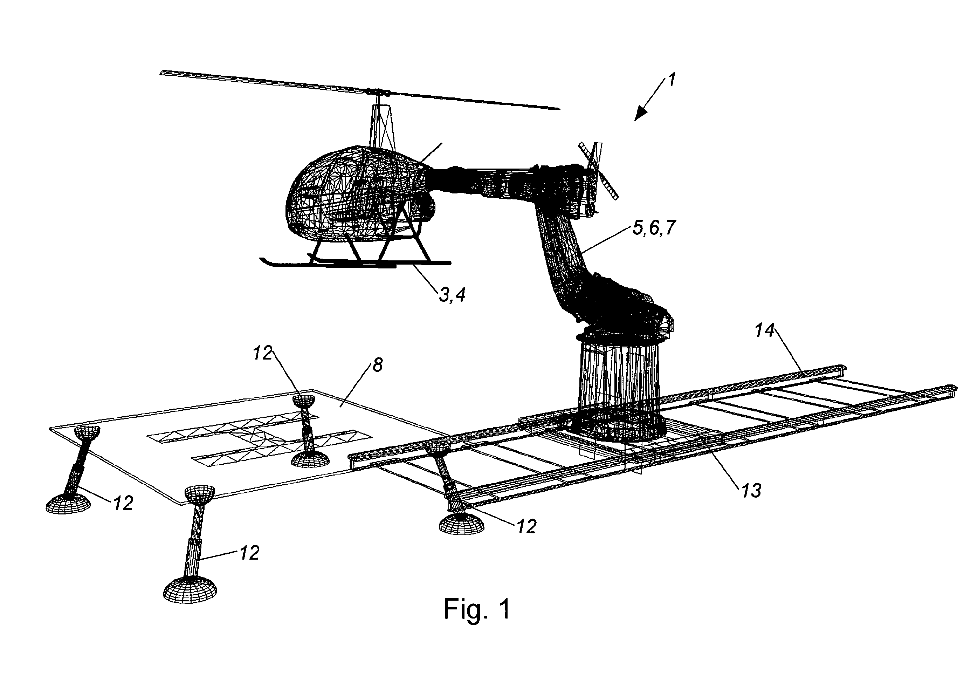

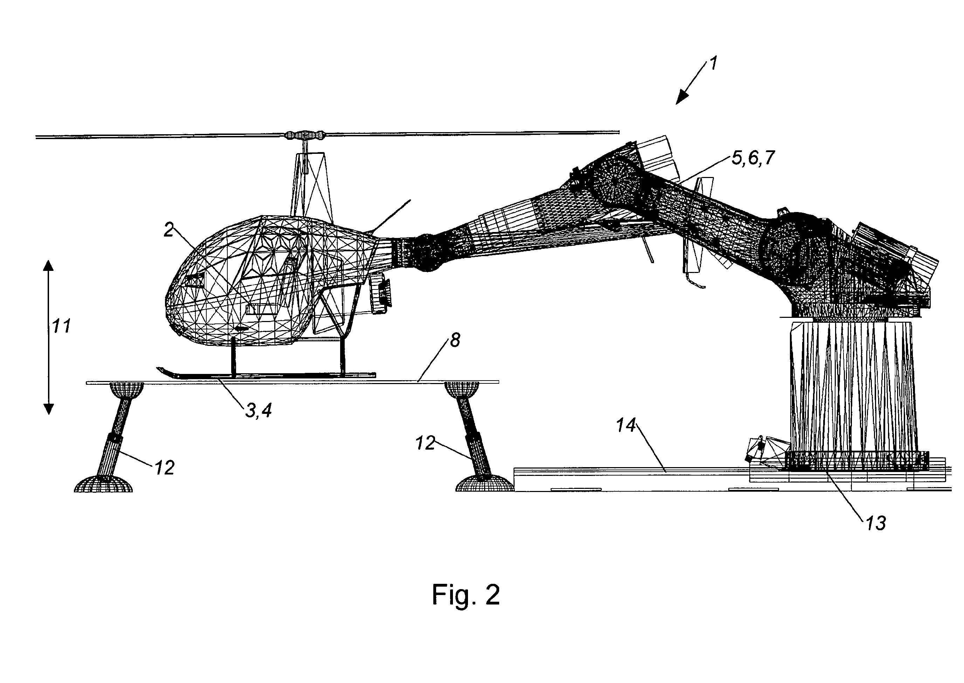

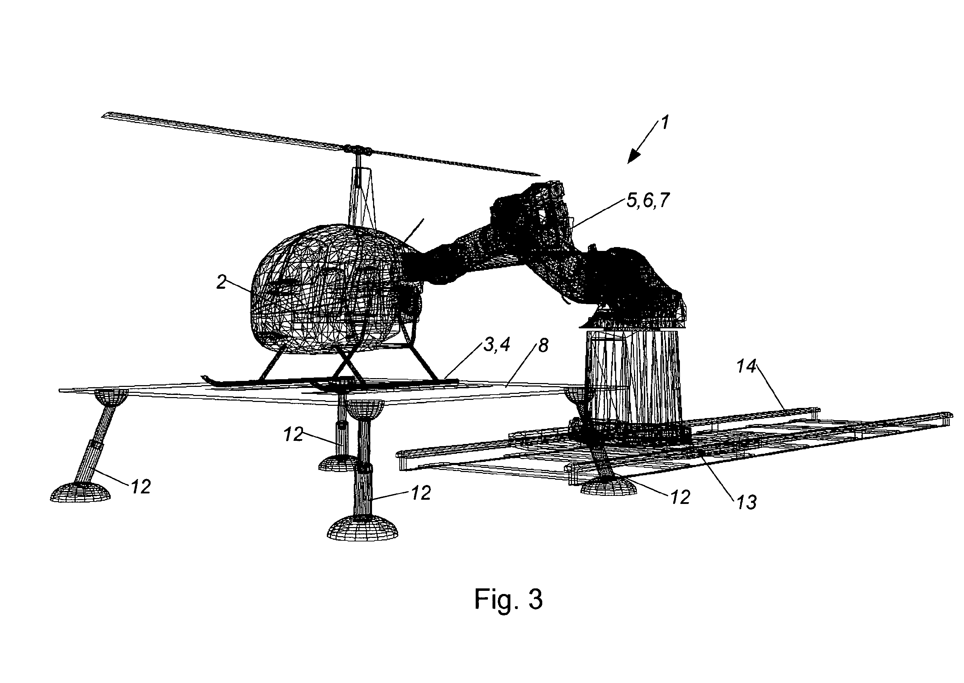

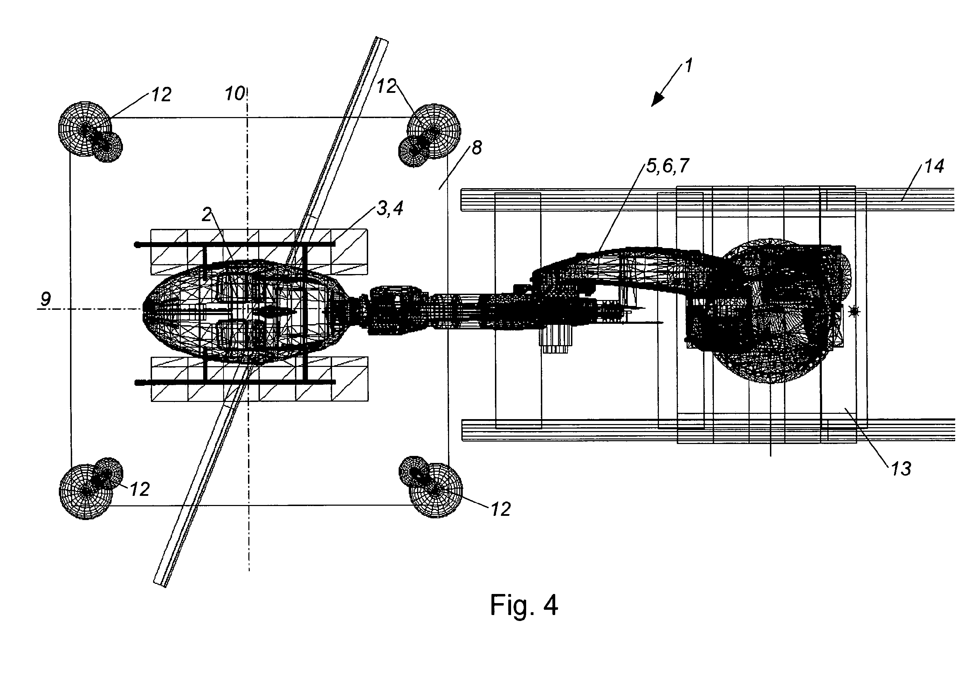

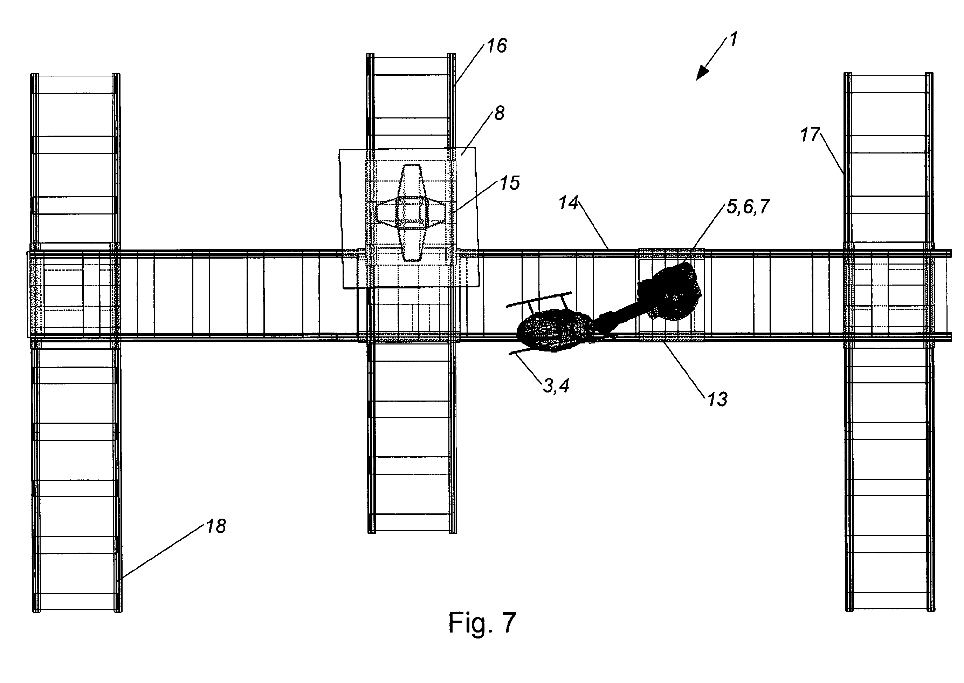

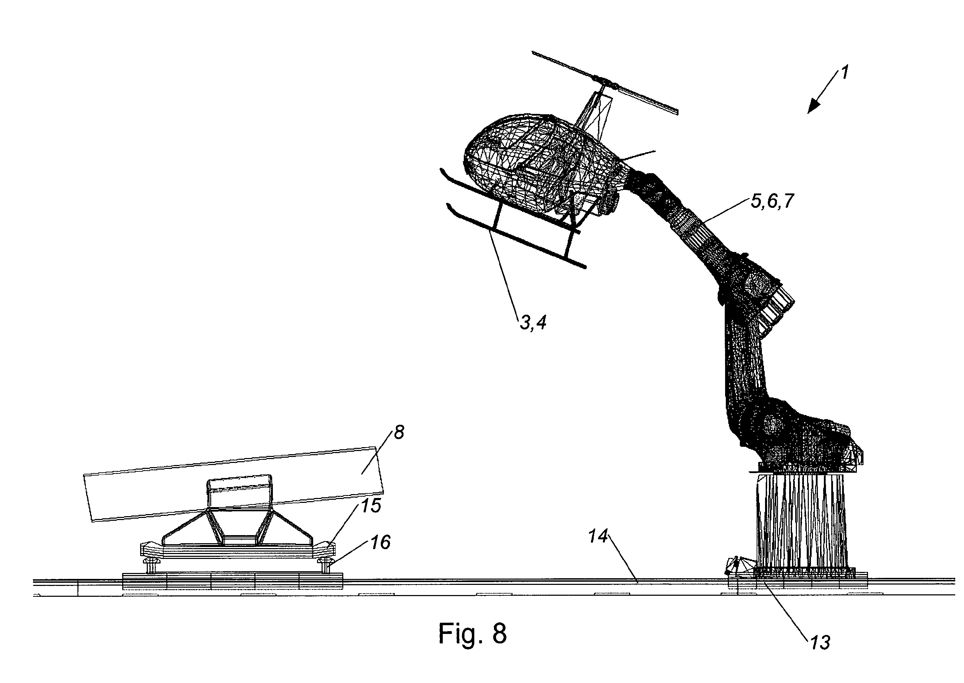

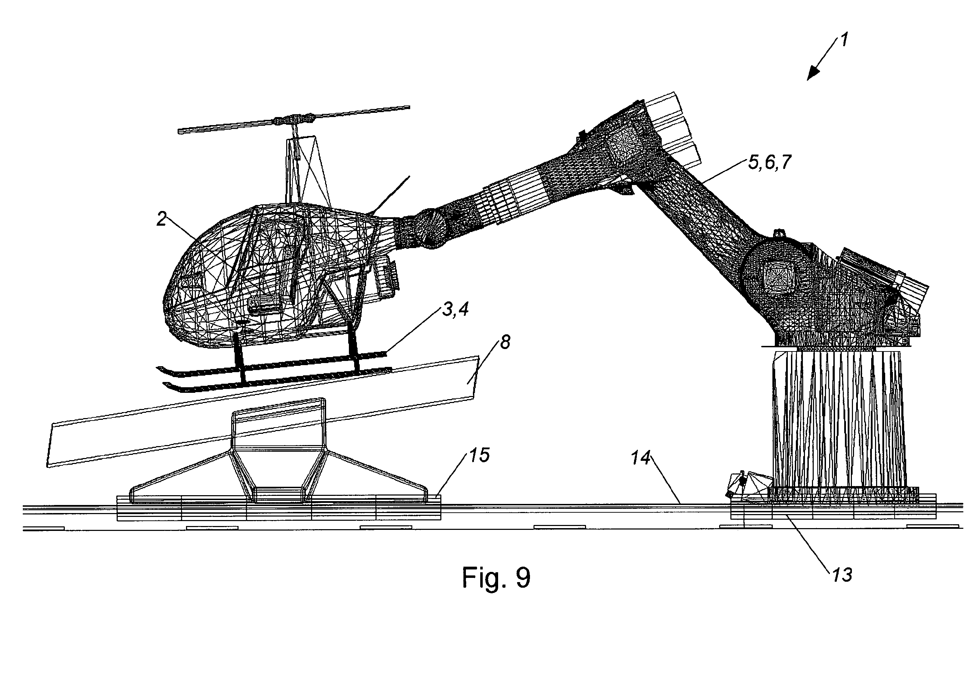

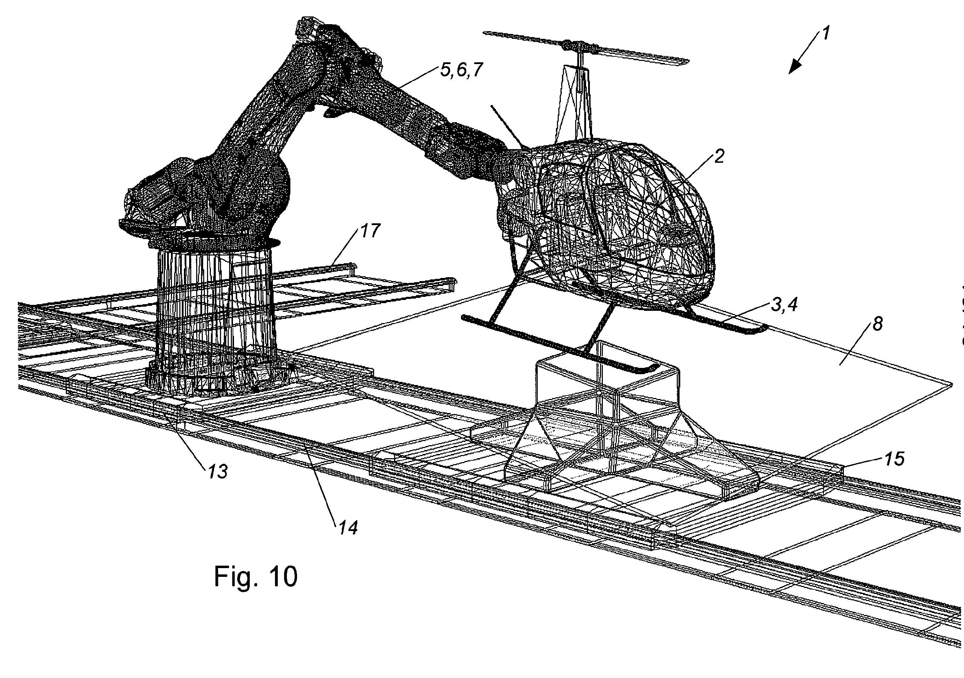

Die Fig. 1 bis 10 zeigen besonders bevorzugte Ausführungen einer Trainingsanordnung 1 zum Training von Flugzuständen eines senkrechtstart-und/oder senkrechtlandefähigen Luftfahrzeuges, umfassend wenigstens eine erste Aufnahme 2 für wenigstens einen Probanden, eine Bodenkontakteinrichtung 3, etwa Kufen 4 und/oder ein Fahrwerk, eine Bewegungseinrichtung 5 und wenigstens ein Steuerorgan, wobei die erste Aufnahme 2 mit der Bewegungseinrichtung 5 im Wesentlichen starr verbunden ist, wobei die Bodenkontakteinrichtung 3 wenigstens mittelbar mit der ersten Aufnahme 2 verbunden ist, wobei die Bewegungseinrichtung 5 als Roboter 6, insbesondere als Industrieroboter 7, mit serieller Kinematik zur Bewegung der ersten Aufnahme 2 in wenigstens sechs räumlichen Freiheitsgraden ausgebildet ist, und wobei das Steuerorgan zur wenigstens mittelbaren Interaktion des Probanden mit der Bewegungseinrichtung 5 ausgebildet ist, wobei die Trainingsanordnung 1 eine Plattform 8 umfasst, zum Abheben und/oder Aufsetzen der Bodenkontakteinrichtung 3, und wobei die Plattform 8 bewegbar, vorzugsweise vorgebbar maschinell verstellbar, ist. Dadurch können kritische Flugzustände, wie insbesondere das Starten bzw. Landen, eines senkrechtstart- und/oder senkrechtlandefähigen Luftfahrzeuges, wie etwa eines Hubschraubers, wirklichkeitsnahe simuliert werden. Beim Training mit einer erfindungsgemäßen Trainingsanordnung 1, bzw. beim erfindungsgemäßen Verfahren, ist ein Proband gezwungen einen "Start" bzw. eine "Landung" real durchzuführen, daher die Kufen 4 bzw. das Fahrwerk des Luftfahrzeuges tatsächlich vom Boden abzuheben bzw. wieder auf diesem aufzusetzen. Dabei entsprechen sämtliche Beschleunigungen und Stöße, aber auch die Sicht aus dem Luftfahrzeug den tatsächlichen Zuständen beim Start bzw. der Landung eines realen Luftfahrzeuges im realen Betrieb. Dadurch kann insbesondere das Starten und/oder Landen eines senkrechtstart- und/oder senkrechtlandefähigen Luftfahrzeuges von einem bewegten Untergrund, wie etwa einer Landplattform eines Schiffs, welches durch den Seegang bewegt wird, wirklichkeitsnahe simuliert werden, wobei die Handhabung des Luftfahrzeuges, sowie die Sicht aus dem Luftfahrzeug den tatsächlichen Bedingungen einer realen Situation entsprechen. Durch die realitätsnahe Simulation und die Möglichkeit diese zu geringen Kosten wesentlich intensiver zu gestalten als bei realen Flugstunden steigt das Ausbildungsniveau der Piloten, wodurch die Unfallgefahr beim letztendlichen Betrieb realer Luftfahrzeuge deutlich reduziert werden kann.

Neben dem Starten und Landen des Luftfahrzeuges auf der bewegten Plattform 8 kann mit einer erfindungsgemäßen Trainingsanordnung 1 auch das Aufnehmen und Absetzen von Passagieren und/oder Fracht von der bzw. auf die bewegte Plattform 8 trainiert werden. Dadurch kann etwa das Absetzen bzw. Aufnehmen eines Arztes, Bergretters und/oder Verletzten auf ein fahrendes Schiff oder einen Zug, etwa auch mittels Seilwinde, trainiert werden. Derartige Situationen, bei welchen neben der Steuerung des Luftfahrzeuges, weiters unter realen Sichtbedingungen eine Außenlast kontrolliert werden muss, sind derzeit bei bekannten Flugsimulatoren nicht möglich.

Insbesondere können gefährliche Hubschraubermanöver, etwa das Landen auf einer im Meer schwimmenden Plattform gefahrlos trainiert werden.

Weiters kann auch das Landen und Starten von Hubschraubern mit Schwimmern an den Kufen reatitätsnahe und dennoch gefahrlos für Piloten, Ausbilder und Material trainiert werden. Dabei kann vorgesehen sein, dass an den Kufen Zusatzeinrichtungen angebracht werden, insbesondere magnetische Zusatzeinrichtungen.

Dadurch kann weiters auch die Belastung der Umwelt durch Lärm und Schadstoffe reduziert werden. Erfindungsgemäße Trainingsanordnungen 1 können auch in einer Flugverbotszone oder einem ruhigen Altstadtbereich angeordnet sein. Derartige Anlagen sind nicht an herkömmliche Flugplätze bzw. an eine Landplattform, welche sich etwa tatsächlich auf einem Schiff befindet, gebunden. Dadurch kann das Anfliegen eines Schiffs im Wellengang auch in einem Binnenland oder in der Wüste trainiert werden.

Eine erfindungsgemäße Trainingsanordnung 1 ist bevorzugt zur Simulation im Wesentlichen sämtlicher Bewegungsabläufe, welchen Menschen durch ein Luftfahrzeug ausgesetzt werden können, in dessen Verhalten sie steuernd und/oder regelnd eingreifen können, vorgesehen. Der Begriff senkrechtstart- und/oder senkrechtlandefähige Luftfahrzeuge umfasst bevorzugt jede Art eines Luftfahrzeugs, welches in der Lage ist senkrecht zu starten, daher abzuheben, und/oder zu landen, daher auf einem Boden oder Untergrund, aufzusetzen. Insbesondere umfasst dieser Begriff sämtliche Arten sog. VTOL-Luftfahrzeuge (VTOL - Vertical Take-Off and Landing), daher jede Art von Hubschraubern bzw. Helikoptern, aber auch Flugzeuge wir die Harrier, die F-35 oder die Jak-38, oder Kipprotorluftfahrzeuge wie die V-22, sowie Tragschrauber. In weiterer Folge wird bevorzugt lediglich der Begriff Luftfahrzeug verwendet werden, wobei dieser im vorstehend dargelegten Sinn auszulegen ist.

Eine erfindungsgemäße Trainingsanordnung 1 weist wenigstens eine erste Aufnahme 2 für wenigstens einen Probanden auf, wobei es sich hiebei um jede Art einer ersten Aufnahme 2 für einen Probanden handeln kann. Der Begriff Proband bezeichnet in diesem Zusammenhang den "Piloten", daher den Menschen, welcher mittels einer erfindungsgemäßen Trainingsanordnung 1 den Umgang mit einem entsprechenden Luftfahrzeug übt, erlernt bzw. trainiert. Bevorzugt ist vorgesehen, dass die erste Aufnahme 2 entsprechend dem zu simulierenden Luftfahrzeug als entsprechend möglichst typgerechter Pilotensitz ausgebildet ist.

Es kann vorgesehen sein, eine vorgebbare Anzahl an ersten Aufnahmen 2 vorzusehen, wodurch neben den Probanden, welcher die Steuerung des zu simulierenden Luftfahrzeugs durchführt etwa auch ein "Passagier" Platz findet. Etwa kann vorgesehen sein, dass die vorgebbare Anzahl an ersten Aufnahmen 2 Teil eines Cockpits, Cockpitmodells oder eines Rumpfzellenmodels eines Luftfahrzeuges ist, wodurch die Simulation besonders wirklichkeitsgetreu erfolgen kann, da in einer derartigen Anordnung die Bedienelemente und Steuerorgane entsprechend dem zu simulierenden Luftfahrzeug angeordnet sind und entsprechend wirklichkeitsgetreu bedient werden können.

Die erste Aufnahme 2 ist mit einer Bewegungseinrichtung 5 im Wesentlichen starr verbunden, wobei die Bewegungseinrichtung 5 zur Bewegung der ersten Aufnahme 2 in wenigstens sechs räumlichen Freiheitsgraden ausgebildet ist. Durch die Bewegungseinrichtung 5 kann die erste Aufnahme 2, und der in dieser angeordnete Proband, innerhalb gewisser Grenzen im Wesentlichen frei - im Rahmen der Verstellmöglichkeiten der Bewegungseinrichtung 5 - im Raum bewegt werden. Dadurch ist es möglich den Probanden in einer Art und Weise zu bewegen, bzw. diesen Probanden Beschleunigungen auszusetzen, wie dies bei bekannten Simulatoren bisher nicht möglich war. Erfindungsgemäß ist vorgesehen, dass die Bewegungseinrichtung 5 als Roboter 6, insbesondere als Industrieroboter 7, mit serieller Kinematik ausgebildet ist. Derartige Industrieroboter 7 mit serieller Kinematik werden in vielfältigen Ausführungen hergestellt und in der automatisierten Fertigung eingesetzt. Bevorzugt ist vorgesehen, dass der Industrieroboter 7 mit serieller Kinematik als Gelenkarmroboter ausgebildet ist, insbesondere als Gelenkarmroboter mit wenigstens sechs verstellbaren Achsen. Ein derartiger Gelenkarmroboter weist wenigstens einen Roboterarm auf, welcher eine vorgebbare Anzahl mittels Gelenken miteinander verbundener Teilarme umfasst. Die Fig. 1 bis 10 zeigen u.a. eine bevorzugte Ausführungsform eines derartigen Industrieroboters 7 mit serieller Kinematik als sog. 6-Achs-Gelenkarmroboter. Als Achse wird dabei bevorzugt eine jede Achse im Sinne einer Symmetrieachse bezeichnet, um welcher bzw. entlang welcher eine Verstellung möglich ist. Daher eine rotatorische Verstellung um eine Achse und/oder eine translatorische Verstellung entlang einer Achse. Bevorzugt werden die Gelenke des Gelenkarmroboters für eine erfindungsgemäße Trainingsanordnung elektromechanisch verstellt. Es kann aber auch vorgesehen sein, diese hydraulisch und/oder pneumatisch zu verstellen.

Der Ausdruck Freiheitsgrad kann als Freiheitsgrad im streng physikalischen Sinn verstanden werden, daher als drei Translationsfreiheitsgrade und drei Freiheitsgrade der Rotation verstanden werden. Der Ausdruck Freiheitsgrad kann aber auch in dem Sinn verstanden werden, dass jeder Freiheitsgrad eine unabhängige Bewegungsmöglichkeit der Bewegungseinrichtung 5, daher des Roboters 6 mit serieller Kinematik bezeichnet. Ein Roboter 6 mit serieller Kinematik, welcher sechs voneinander unabhängige Bewegungsmöglichkeiten aufweist, wie etwa der in den Fig. 1 bis 10 dargestellte, muss daher nicht notgedrungen sechs physikalische Freiheitsgrade aufweisen.

Eine erfindungsgemäße Trainingsanordnung 1 weist wenigstens ein Steuerorgan zur wenigstens mittelbaren Interaktion des Probanden mit der Bewegungseinrichtung 5 auf. Das Steuerorgan ist bevorzugt an das zu simulierende Luftfahrzeug angepasst, und umfasst etwa bei der bevorzugten Anwendung zum Training des Hubschrauberfluges einen Steuerknüppel, Pedale sowie ein Hebel für die kollektive Blattverstellung des Hauptrotors. Die Steuerorgane sind dabei an das jeweils zu trainierende Luftfahrzeug angepasst. Mittels des wenigstens einen Steuerorgans kann der Proband das Verhalten der Bewegungseinrichtung 5 beeinflussen. Hiebei ist bevorzugt vorgesehen, dass es sich nicht um eine direkte Steuerung dieser Bewegungseinrichtung 5 handelt. Vielmehr ist vorgesehen, dass der Proband über das wenigstens eine Steuerorgan Steuerbefehle an wenigstens eine Rechen- und Kontrolleinheit übermittelt, welche unter Berücksichtigung der Eigenschaften des zu simulierenden Luftfahrzeugs und des jeweiligen Standes eines momentan ablaufenden Trainings die Bewegungseinrichtung 5 steuert. Die Reaktion eines Luftfahrzeugs ist in der Regel von dessen jeweiligen Flugzuständen - entsprechend dem Stand einer Trainingssituation, etwa beeinflusst durch Wind und Böen - abhängig, und wird daher durch die Rechen- und Kontrolleinheit bei der Steuerung der Bewegungseinrichtung 5 berücksichtigt.

Es ist vorgesehen, dass erfindungsgemäße Trainingsanordnungen 1 eine Bodenkontakteinrichtung 3 aufweisen. Bei einer Bodenkontakteinrichtung 3 handelt es sich bevorzugt um unmittelbare Baugruppen eines Luftfahrzeugs, welche je nach zu simulierendem Luftfahrzeug als Kufen 4, Fahrwerk oder einer Kombination beider ausgebildet sind. Der Begriff Bodenkontakteinrichtung 3 umfasst jedoch bevorzugt auch sämtliche weiteren Vorrichtungen bzw. Körper, welche an dem Luftfahrzeug bzw. dessen Model angeordnet sind, und welche dazu vorgesehen sind, etwa im Rahmen einer Trainingssituation, mit dem Boden bzw. der Plattform 8 in Kontakt gebracht zu werden. Insbesondere umfasst der Begriff Bodenkontakteinrichtung 3 in diesem Zusammenhang Anbauten an ein Luftfahrzeug, wie etwa außen liegende Halterungen für Krankentragen, Außenlasten jeder Art, vorzugsweise Außenlasten, welche an einem Seil bzw. an einer Seilwinde an dem Luftfahrzeug bzw. dessen Model befestigt sind, etwa Fracht, eine Krankentrage oder ein Mensch, beispielsweise ein Bergretter. Weiters umfasst der Begriff Bodenkontakteinrichtung bevorzugt etwa auch auf den Kufen stehende Menschen.

Bei der Ausbildung der Bodenkontakteinrichtung 3 als Kufen 4 und/oder Fahrwerk ist vorzugsweise vorgesehen, diese in der Art und Weise starr bzw. beweglich mit der ersten Aufnahme 2 zu verbinden, dass die sich beim Start oder der Landung, dabei beim Abheben oder aufsetzen von bzw. auf einem Untergrund oder Boden, insbesondere auf die Plattform 8, an die erste Aufnahme 2 fortpflanzenden Vibrationen weitestgehend den bei einem vergleichbaren realen Luftfahrzeug auftretenden Vibrationen entsprechen. Gemäß einer besonders bevorzugten Weiterbildung einer erfindungsgemäßen Trainingsanordnungen ist vorgesehen, dass die Bodenkontakteinrichtung 3 wenigstens einen Sollbruchbereich und/oder einen Knautschbereich aufweist. Dadurch können Beschädigungen im Bereich der Bewegungseinrichtung 3 und/oder eines Rumpfzeltenmodels vermieden werden, sofern es beim Training zu einem zu harten Zusammenstoß zwischen der Bodenkontakteinrichtung 3 und der Plattform 8 kommen sollte. In einem solchen Fall würde lediglich die Bodenkontakteinrichtung 3 in Mitleidenschaft gezogen werden.

Erfindungsgemäß ist vorgesehen, dass die Trainingsanordnung 1 eine Plattform 8 umfasst, zum Abheben und/oder Aufsetzen der Bodenkontakteinrichtung 3. Bei der Plattform 8 kann es sich etwa um jede Art einer Platte handeln, welche dazu geeignet ist, den im Betrieb der erfindungsgemäßen Trainingsanordnung 1 auftretenden Kräften standzuhalten, wobei auch vorgesehen sein kann, die Plattform 8 bewusst mechanisch wenig widerstandsfähig auszubilden. Dadurch können bei einem zu starken Zusammenstoß zwischen der Bodenkontakteinrichtung 3 und der Plattform 8 Beschädigungen an der Bodenkontakteinrichtung 3 vermieden werden. Bevorzugt ist vorgesehen, dass die Plattform 8 in Form, Größe und Ausgestaltung an die in der realen Welt vorscheinenden Plattformen angepasst ist, deren Anfliegen trainiert werden soll.

Erfindungsgemäß ist vorgesehen, dass die Plattform 8 bewegbar ist. Bewegbar bedeutet in diesem Zusammenhang insbesondere, dass die Plattform 8 dazu ausgebildet und/oder vorgesehen ist, bewegt zu werden, wobei dies auch ein Verstellen, also eine statische Justage, bezeichnen kann. Besonders bevorzugt ist vorgesehen, dass die Plattform 8 vorgebbar maschinell verstellbar ist. Dabei ist insbesondere vorgesehen, dass die Plattform 8 dynamische Bewegungen ausführen kann. Dies ist an einer Plattform 8 anhand deren Lagerung, Aufhängung, sowie anhand entsprechender Antriebsmittel erkennbar. Durch die Möglichkeit die Plattform 8 vorgebbar angesteuert, insbesondere dynamisch, zu bewegen, bestehen die eingangs dargelegten Vorteile.

Bevorzugt ist vorgesehen, dass die Plattform 8 um eine horizontale erste Achse 9 bewegbar, vorzugsweise vorgebbar maschinell verstellbar, ist, wodurch bereits das Anfliegen auf eine schwankende bzw. kippende Plattform 8 trainiert werden kann. Dies ist insbesondere bei ungeübten Piloten vorteilhaft. In Weiterbildung ist bevorzugt vorgesehen, dass die Plattform 8 um eine horizontale, von der ersten Achse 9 unterschiedliche, zweite Achse 10 bewegbar, vorzugsweise vorgebbar maschinell verstellbar, ist, wodurch in Kombination mit einer Bewegung um die erste Achse 9, der Anflug auf eine Plattform 8 trainiert werden kann, welche um zwei Achsen 9, 10 schaukelt. Dies wird gemäß einer vorteilhaften Weiterbildung dadurch weiter verbessert, dass die Plattform 8 in vertikaler Richtung 11 bewegbar, vorzugsweise vorgebbar maschinell verstellbar, ist. Dadurch ist eine sehr gute Simulation der Bewegungen einer Hubschrauberplattform eines Schiffs bei unterschiedlichem Seegang möglich.

Zum Verursachen der, insbesondere dynamischen, Bewegungen der Plattform 8 ist vorgesehen, dass die Plattform 8 wenigstens einen Aktuator aufweist, bzw. von wenigstens einem Aktuator angesteuert wird, wobei der Aktuator die Plattform 8 mit einem Unterbau, etwa einem Boden oder einem beweglichen zweiten Schlitten 15 verbindet. Bei einem derartigen Aktuator, kann es sich um jede Vorrichtung handeln, welche ein, insbesondere elektrisches, Eingangsignal in eine mechanische Verstellung der Plattform 8 umwandelt, wie etwa Hydraulikzylinder, elektrische Stellmotoren und/oder elektrische Linearantriebe. Bei einer lediglich um die erste Achse 9 bewegbaren Plattform 8 kann eine Lagerung der Plattform 8 an der ersten Achse 9 vorgesehen sein, sowie ein Stellmotor oder ein Hydraulikzylinder zur Bewegung der Plattform 8.

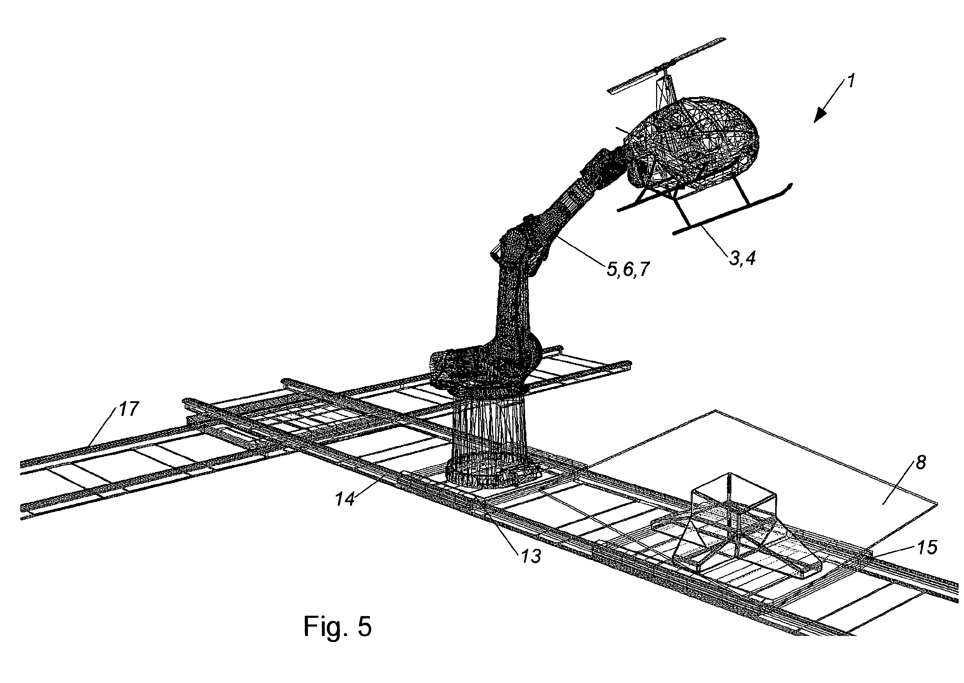

Gemäß den bevorzugten Ausführungsformen einer mehrdimensional bewegbaren Plattform 8 ist vorgesehen, dass die Plattform 8 an wenigstens drei voneinander beabstandeten Bereichen jeweils mit einem Linearaktuator 12, insbesondere einem Hydraulikzylinder oder einem Linearmotor, verbunden ist. Die Fig. 1 bis 4 zeigen eine derartige Ausführungsform, bei welcher zusätzlich ein vierter Linearaktuator 12 vorgesehen ist. Mit einer derartigen Anordnung sind Bewegungen der Plattform 8 um die erste und zweite Achse 9, 10, sowie entlang einer vertikalen Richtung 11 möglich, wobei sämtliche dieser Bewegungen überlagert werden können. Es kann in Weiterbildung vorgesehen sein, dass die Plattform 8 als Hexapod ausgebildet ist. Dadurch besteht weiters die Möglichkeit einen vollständigen seitlichen Versatz der Plattform zu erreichen, wodurch die Anforderungen an den trainierenden Piloten weiter gesteigert werden können. Die Fig. 5 bis 10 zeigen die Lagerung der Plattform 8 lediglich schematisch.

Der wenigstens eine Linearaktuator 12 bzw. die Linearaktuatoren 12 werden von einer Rechen- und Kontrolleinheit angesteuert, welche einstückig mit der Rechen-und Kontrolleinheit ausgebildet sein kann, welche ebenfalls die Bewegungseinrichtung 5 steuert. Bevorzugt ist vorgesehen, dass die Rechen- und Kontrolleinheit Bewegungsmuster für die Bewegungen der Plattform 8 in einem Speicher abgelegt aufweist, und diese vorgebbar ausführen kann, bzw. dass diese mögliche bzw. sinnvolle Bewegungsmuster für die Bewegungen der Plattform 8 selbst generiert. Besonders bevorzugt ist vorgesehen, dass die Plattform 8 unabhängig von Bewegungen der ersten Aufnahme 2 bewegt wird. Daher haben die "Flugbewegungen" des simulierten Luftfahrzeuges bevorzugt keinen Einfluss auf die Bewegungen, welche die Plattform 8 durchführt. Allerdings kann vorgesehen sein, dass etwa simulierte Windböen sowohl Einfluss auf die Bewegungen der Plattform 8, als auch auf die Bewegungen des simulierten Luftfahrzeugs, sprich die Bewegungen der ersten Aufnahme 2 haben.

Zur weiteren Steigerung der Realitätsnähe des Trainings kann vorgesehen sein, dass die Trainingsanordnung 1 wenigstens eine Windmaschine und/oder wenigstens eine Regenmaschine und/oder wenigstens eine Schneekanone umfasst. Dadurch kann, zusammen mit einer Kontrolle der Beleuchtungssituation, das Training weiter erschwert werden. Bevorzugt werden die wenigstens eine Windmaschine und/oder wenigstens eine Regenmaschine und/oder wenigstens eine Schneekanone wenigstens mittelbar von besagter Rechen- und Kontrolleinheit angesteuert.

Um den Anflug auf die Plattform besser Trainieren zu können, ist gemäß einer in den Fig. 1 bis 10 dargestellten bevorzugten Ausführungsformen vorgesehen, dass der Roboter 6 auf einem ersten Schlitten 13 angeordnet ist, und dass der erste Schlitten 13 längsverschiebbar auf einer ersten Linearführungsanordnung 14 gelagert ist. Der erste Schlitten 13 weist dabei bevorzugt eine Antriebseinheit auf, welche vorzugsweise wenigstens mittelbar von der Rechen- und Kontrolleinheit angesteuert ist. Wie in den Fig. 5, 6, 7 und 10 dargestellt, kann vorgesehen sein, dass die erste Linearführungsanordnung 14 selbst wiederum beweglich gelagert ist, etwa in den dritten und vierten Linearführungsanordnungen 17 und 18. Dabei ist bevorzugt vorgesehen, die gesamte erste Linearführungsanordnung 14 vorgebbar motorisch zu verstellen. Es kann aber auch vorgesehen sein, dass die erste Linearführungsanordnung 14 zufolge einer rotatorischen Bewegung bewegbar ist. Der erste Schlitten 13 bilden bei den in den Fig. 1 bis 10 dargestellten bevorzugten Ausführungen ebenfalls die Lagerung für die Bewegungseinrichtung 5, und muss die entsprechend zu erwartenden Kräfte und Momente aufnehmen.

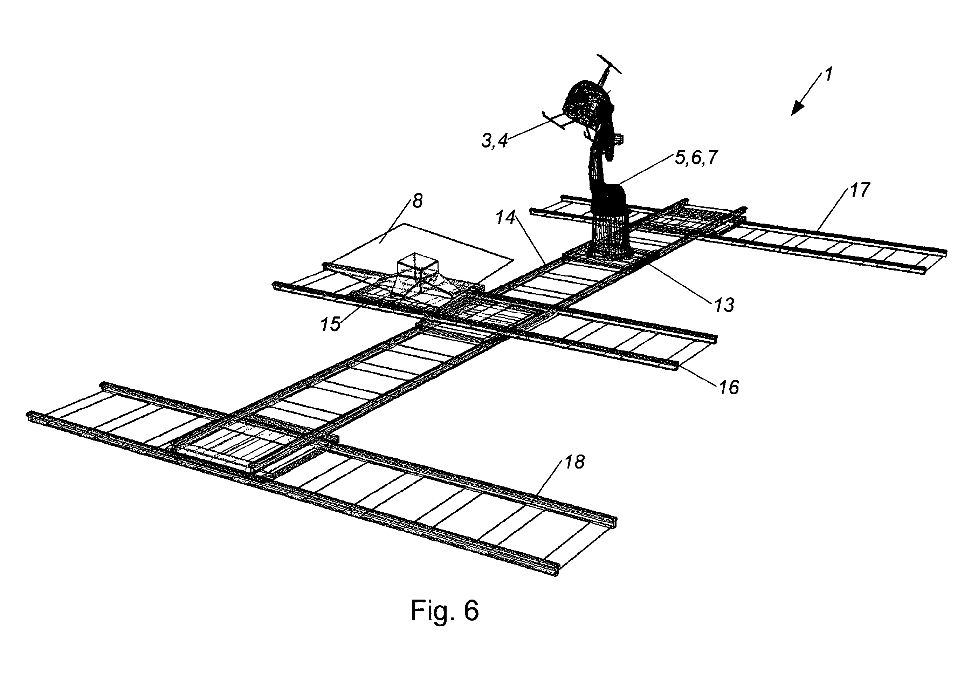

Um den Raum möglicher zu trainierender Flugzustände bzw. Anflugsituationen weiters zu erweitern ist bevorzugt vorgesehen, dass die Plattform 8 auf einem zweiten Schlitten 15 angeordnet ist, und dass der zweite Schlitten 15 längsverschiebbar auf einer zweiten Linearführungsanordnung 16 gelagert ist, wobei die zweite Linearführungsanordnung 16 bevorzugt und wie in Fig. 6 dargestellt, wiederum auf der ersten Linearführungsanordnung 14 bewegbar angeordnet sein kann. Vorzugsweise weist der zweite Schlitten 15 ebenfalls wenigstens eine Antriebseinheit auf, und ist insbesondere mittelbar von der Rechen- und Kontrolleinheit angesteuert. Der zweite Schlitten 15 bildet weiters das bevorzugte Widerlager für die Linearaktuatoren 12.

Die Fig. 1 bis 10 zeigen unterschiedliche bevorzugte Ausführungsformen einer erfindungsgemäßen Trainingsanordnung 1, bei welchen die Bewegungseinrichtung 5 als Gelenkarmroboter ausgebildet ist. Dieser trägt Teile einer Zelle eines Hubschraubers, in welcher Zelle die erste Aufnahme 2 in Form des Pilotensitzes angeordnet ist. Weiters ist ein zweiter Sitz in der Zelle angeordnet. Der Gelenkarmroboter ist jeweils auf einem ersten Schlitten 13 befestigt, und mittels diesem translatorisch bewegbar.

Die Erfindung betrifft weiters ein Verfahren zum Training von Flugzuständen eines senkrechtstart- und/oder senkrechtlandefähigen Luftfahrzeuges, mit einer Trainingsanordnung 1 deren Bewegungseinrichtung 5 als Roboter 6 mit serieller Kinematik ausgebildet ist, insbesondere einer erfindungsgemäßen Trainingsanordnung 1, wobei Bewegungen einer an der Bewegungseinrichtung 5 angeordneten ersten Aufnahme 2 für wenigstens einen Probanden mittels wenigstens eines Steuerorgans gesteuert werden, wobei eine Plattform 8 vorgebbar bewegt wird, wobei das wenigstens eine Steuerorgan von einem in der ersten Aufnahme 2 angeordneten Probanden derart betätigt wird, wobei eine mit der ersten Aufnahme 2 verbundene Bodenkontakteinrichtung 3 von der bewegten Plattform 8 abgehoben wird oder auf die bewegte Plattform 8 aufgesetzt wird.

Bei einem derartigen Verfahren können die eingangs dargelegten Vorteile erzielt werden. Wie vorstehend bei der Beschreibung der Vorrichtung bereits dargelegt, ist insbesondere vorgesehen, dass die Plattform 8 vorgebbar um eine horizontale erste Achse 9 bewegt wird. In Weiterbildung der Erfindung ist vorgesehen, dass die Plattform 8 vorgebbar um eine horizontale, von der ersten Achse 9 unterschiedliche, zweite Achse 10 bewegt wird. Unabhängig von den Bewegungen um die erste oder die zweite Achse 9, 10 ist weiters bevorzugt vorgesehen, dass die Plattform 8 vorgebbar in vertikaler Richtung 11 bewegt wird.

Sämtliche weiteren, in der Beschreibung bzw. den Ansprüchen beschriebenen Verfahrensschritte, auch wenn diese als Ablauf eines Vorganges bzw. einer Funktion einer Vorrichtung beschrieben sind, beschreiben Verfahrensschritte einer bevorzugten Ausbildung eines erfindungsgemäßen Verfahrens.

Bei einer als Kreuz-Schienensystem ausgebildeten Linearführungsanordnung 14 kann der operative Radius erheblich erweitert werden, wobei zusätzliche Möglichkeiten der gefahrlosen Trainingsanordnung von gefährlichen Flugsituationen eines Hubschraubers ermöglicht werden und diese Flugsituationen realitätsnah trainiert werden können.

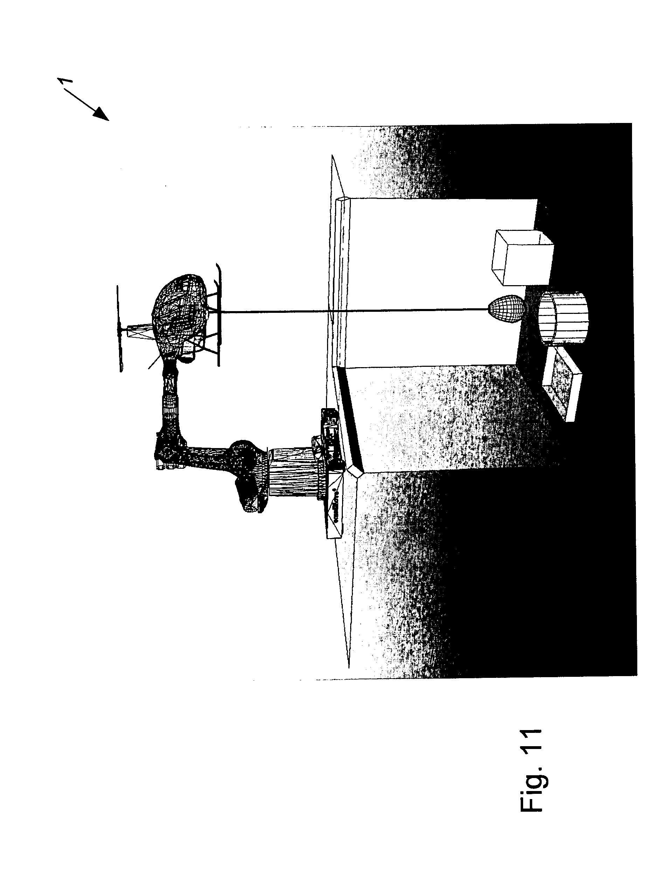

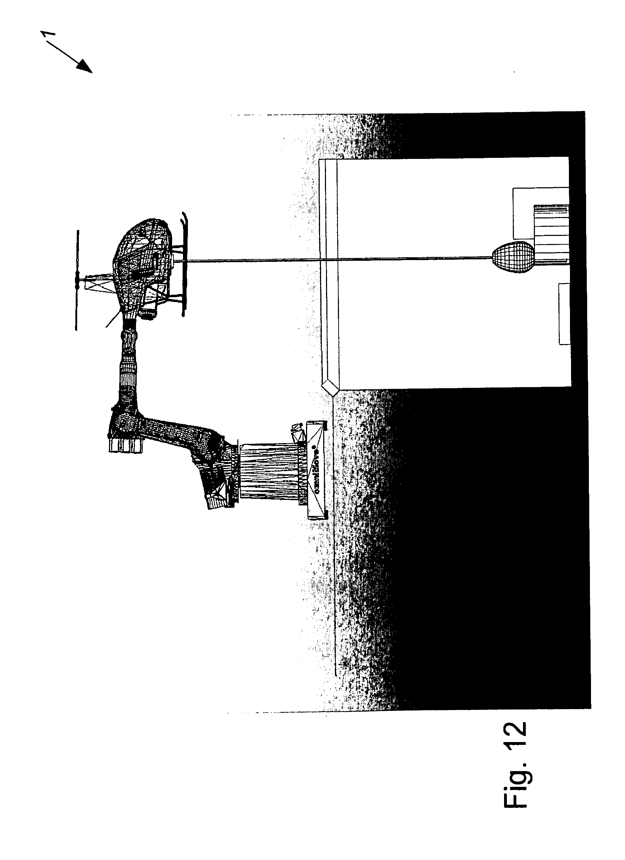

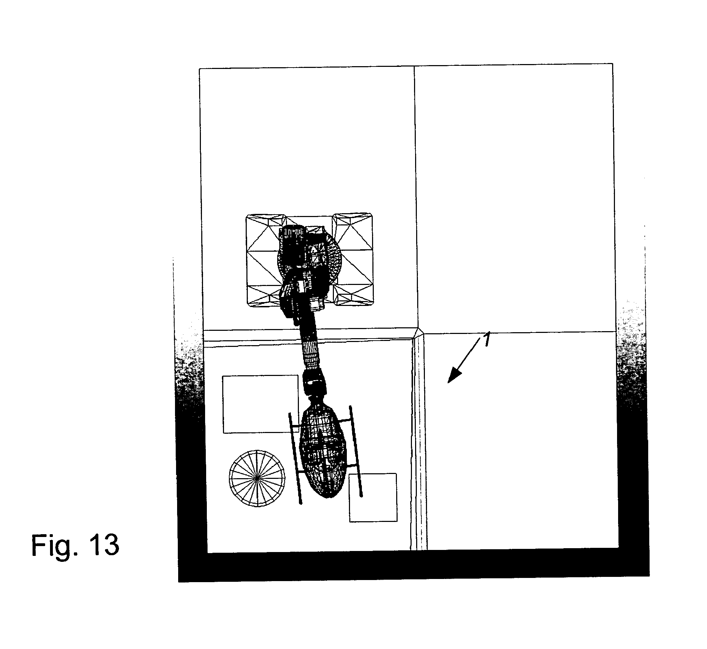

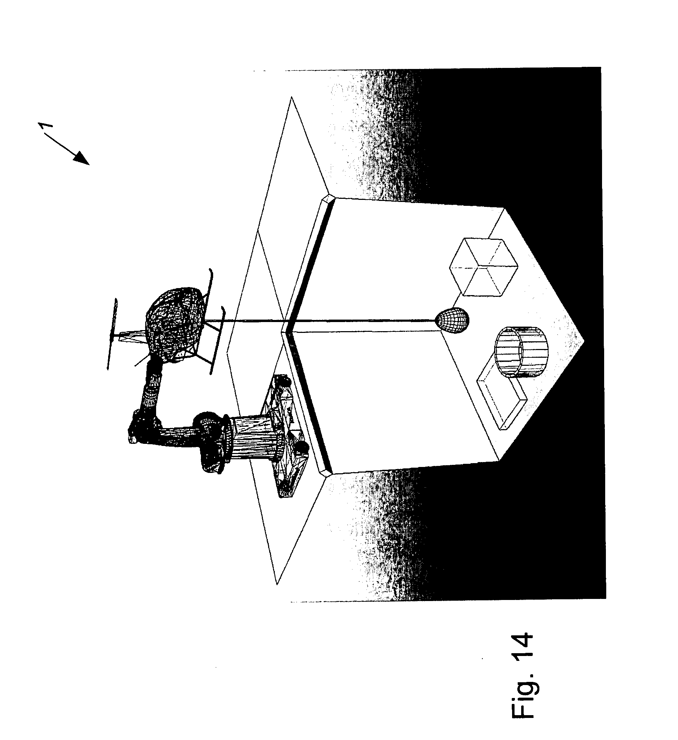

Es kann auch das Transportieren von Außenlasten am Haken einfach und gefahrlos trainiert werden, wobei über einer Grube das Manövrieren des Hubschraubers mit tatsächlicher am Seil hängender Last möglich ist. Sind im Bereich der Linearführung 14 sowohl die Plattform 8 als auch die Grube angeordnet, so kann einfach eine Vielzahl an gefährlichen Situationen mit der Trainingsanordnung trainiert werden. Mit der Trainingsanordnung kann ein realitätsnahes Training erfolgen, wobei die Gefahren für Piloten, Ausbildner, weiteres Personal, wie Begleitpersonen zur Bedienung von Seilwinden oder ähnliches, und das Material gering gehalten werden können. Dabei können mit dem Training dem Piloten die Grenzen seines Könnens aufgezeigt werden und auch Situationen trainiert werden, bei denen der Pilot den Hubschrauber nicht mehr sicher landen und/oder starten kann. Dabei kann einem Piloten geholfen werden, die Gefahren besser einzuschätzen. In den Fig. 11 bis 14 ist eine Ausführungsform der Trainingsanordnung 1 mit einer Grube dargestellt.

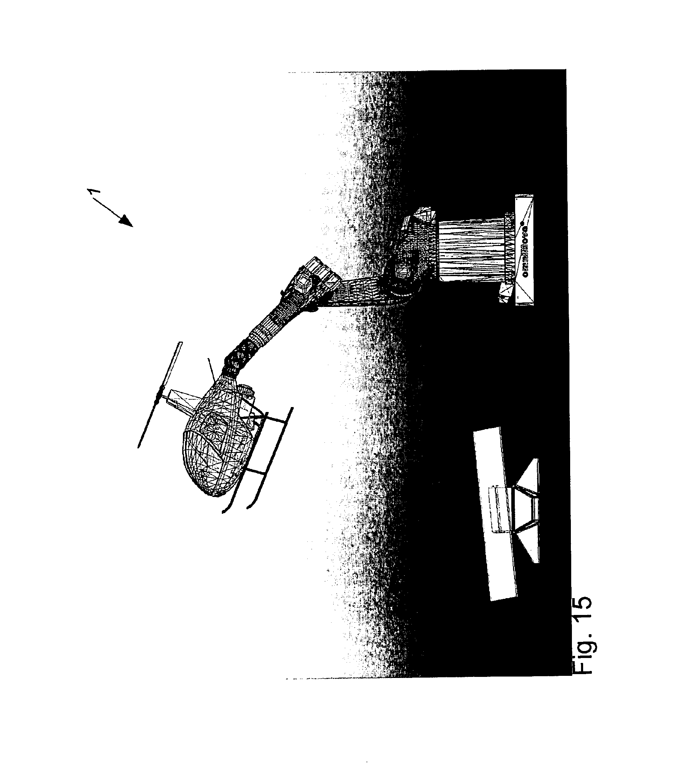

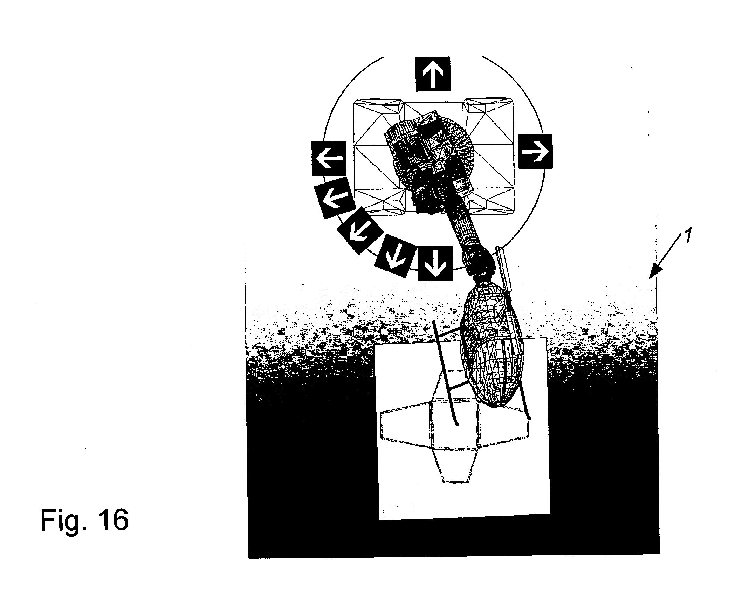

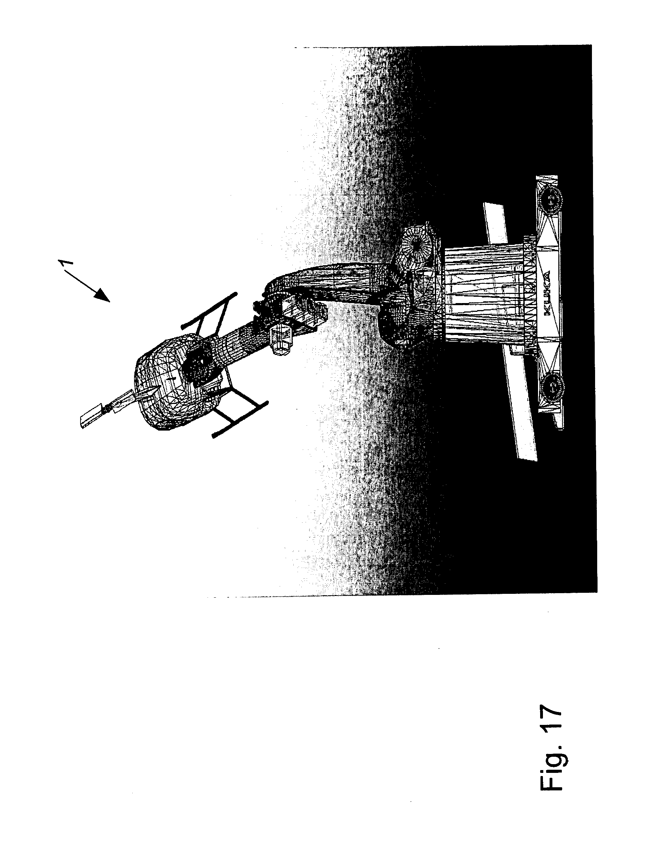

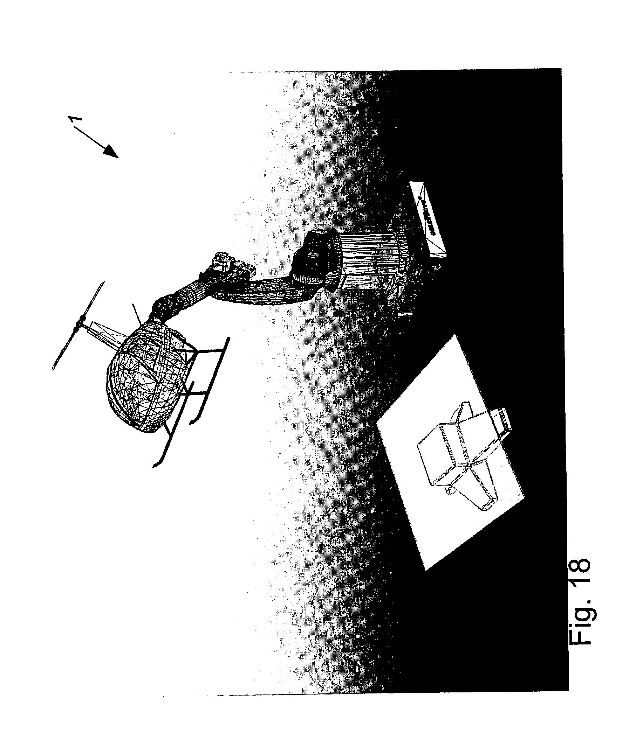

Bei anderen Ausführungsformen kann vorgesehen sein, dass die Linearführungsanordnung 14 als eine in allen Richtungen frei im Raum bewegliche mobile Plattform ausgebildet ist, wie beispielsweise die unter der Bezeichnung omniMoveⓇ vertriebene Plattform von der Firma Kuka, wobei ein besonders großer Bewegungsradius bereitgestellt werden kann. Bei diesen Ausführungsformen kann nahezu jeder stabile Untergrund, beispielsweise ein Rollfeld, für die Trainingsanordnung genützt werden, wodurch ein mobiler Einsatz der Trainingsordnung besonders einfach ermöglicht werden kann. In den Fig. 15 bis 18 ist eine Ausführungsform der Trainingsanordnung mit einer in allen Richtungen des Raumes frei beweglichen Plattform gezeigt.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Trainingsanordnung (1) zum Training von Flugzuständen eines senkrechtstart-und/oder senkrechtlandefähigen Luftfahrzeuges, umfassend wenigstens eine erste Aufnahme (2) für wenigstens einen Probanden, eine Bodenkontakteinrichtung (3), etwa Kufen (4) und/oder ein Fahrwerk, eine Bewegungseinrichtung (5) und wenigstens ein Steuerorgan, wobei die erste Aufnahme (2) mit der Bewegungseinrichtung (5) im Wesentlichen starr verbunden ist, wobei die Bodenkontakteinrichtung (3) wenigstens mittelbar mit der ersten Aufnahme (2) verbunden ist, wobei die Bewegungseinrichtung (5) als Roboter (6), insbesondere als Industrieroboter (7), mit serieller Kinematik zur Bewegung der ersten Aufnahme (2) in wenigstens sechs räumlichen Freiheitsgraden ausgebildet ist, und wobei das Steuerorgan zur wenigstens mittelbaren Interaktion des Probanden mit der Bewegungseinrichtung (5) ausgebildet ist, **dadurch gekennzeichnet, dass** die Trainingsanordnung (1) eine Plattform (8) umfasst, zum Abheben und/oder Aufsetzen der Bodenkontakteinrichtung (3), und dass die Plattform (8) bewegbar, vorzugsweise vorgebbar maschinell verstellbar, ist.

2. Trainingsanordnung (1) nach Anspruch 1, **dadurch gekennzeichnet, dass** die Plattform (8) um eine horizontale erste Achse (9) bewegbar, vorzugsweise vorgebbar maschinell verstellbar, ist.

3. Trainingsanordnung (1) nach Anspruch 2, **dadurch gekennzeichnet, dass** die Plattform (8) um eine horizontale, von der ersten Achse (9) unterschiedliche, zweite Achse (10) bewegbar, vorzugsweise vorgebbar maschinell verstellbar, ist.

4. Trainingsanordnung (1) nach einem der Ansprüche 1 bis 3, **dadurch gekennzeichnet, dass** die Plattform (8) in vertikaler Richtung (11) bewegbar, vorzugsweise vorgebbar maschinell verstellbar, ist.

5. Trainingsanordnung (1) nach einem der Ansprüche 1 bis 4, **dadurch gekennzeichnet, dass** die Plattform (8) an wenigstens drei voneinander beabstandeten Bereichen jeweils mit einem Linearaktuator (12), insbesondere einem Hydraulikzylinder oder einem Linearmotor, verbunden ist.

6. Trainingsanordnung (1) nach einem der Ansprüche 1 bis 5, **dadurch gekennzeichnet, dass** der Roboter (6) auf einem ersten Schlitten (13) angeordnet ist, und dass der erste Schlitten (13) längsverschiebbar auf einer ersten Linearführungsanordnung (14) gelagert ist.

7. Trainingsanordnung (1) nach einem der Ansprüche 1 bis 6, **dadurch gekennzeichnet, dass** die Plattform (8) auf einem zweiten Schlitten (15) angeordnet ist, und dass der zweite Schlitten (15) längsverschiebbar auf einer zweiten Linearführungsanordnung (16) gelagert ist.

8. Trainingsanordnung (1) nach Anspruch 6 oder 7, **dadurch gekennzeichnet, dass** der erste Schlitten (13) und/oder der zweite Schlitten (15) jeweils wenigstens eine Antriebseinheit aufweisen.

9. Trainingsanordnung (1) nach einem der Ansprüche 1 bis 8, **dadurch gekennzeichnet, dass** die Bodenkontakteinrichtung (3) wenigstens einen Sollbruchbereich und/oder einen Knautschbereich aufweist.

10. Trainingsanordnung (1) nach einem der Ansprüche 1 bis 9, **dadurch gekennzeichnet, dass** die Trainingsanordnung (1) wenigstens eine Windmaschine und/oder wenigstens eine Regenmaschine und/oder wenigstens eine Schneekanone umfasst.

11. Verfahren zum Training von Flugzuständen eines senkrechtstart- und/oder senkrechtlandefähigen Luftfahrzeuges, mit einer Trainingsanordnung (1) deren Bewegungseinrichtung (5) als Roboter (6) mit serieller Kinematik ausgebildet ist, insbesondere einer Trainingsanordnung (1) nach einem der Ansprüche 1 bis 10, wobei Bewegungen einer an der Bewegungseinrichtung (5) angeordneten ersten Aufnahme (2) für wenigstens einen Probanden mittels wenigstens eines Steuerorgans gesteuert werden, **dadurch gekennzeichnet, dass** eine Plattform (8) vorgebbar bewegt wird, dass das wenigstens eine Steuerorgan von einem in der ersten Aufnahme (2) angeordneten Probanden derart betätigt wird, dass eine mit der ersten Aufnahme (2) verbundene Bodenkontakteinrichtung (3) von der bewegten Plattform (8) abgehoben wird oder auf die bewegte Plattform (8) aufgesetzt wird.

12. Verfahren nach Anspruch 11, **dadurch gekennzeichnet, dass** die Plattform (8) unabhängig von Bewegungen der ersten Aufnahme (2) bewegt wird.

13. Verfahren nach Anspruch 11 oder 12, **dadurch gekennzeichnet, dass** die Plattform (8) vorgebbar um eine horizontale erste Achse (9) bewegt wird.

14. Verfahren nach Anspruch 13, **dadurch gekennzeichnet, dass** die Plattform (8) vorgebbar um eine horizontale, von der ersten Achse (9) unterschiedliche, zweite Achse (10) bewegt wird.

15. Verfahren nach einem der Ansprüche 11 bis 14, **dadurch gekennzeichnet, dass** die Plattform (8) vorgebbar in vertikaler Richtung (11) bewegt wird.
